# DEMANDE DE BREVET EUROPEEN

(11) **EP 1 811 778 A1**
(43) Date de publication de la demande: **25.07.2007**
(21) Numéro de dépôt: 06100799.3
(22) Date de dépôt: 24.01.2006
(51) Int. Cl.: H04N 7/167, H04N 5/00, H04N 7/24, H04N 7/16, G06F 21/00

(54) **Méthode de mise à jour du microprogramme d'un module de sécurité**

(71) Demandeur: Nagracard S.A., 1033 Cheseaux-sur-Lausanne (CH)
(72) Inventeur: Carrel, Xavier, Le Mont-sur-Lausanne 1052 (CH); Brique, Olivier, Corseaux 1802 (CH); Kudelski, Henri, Grandvaux 1091 (CH); Fischer, Nicolas, Versoix 1290 (CH)
(74) Mandataire: Wenger, Joel-Théophile

(57) **Abrégé**

Méthode de mise à jour du microprogramme d'un module de sécurité (SM3, SM4) associé à une unité d'utilisateur de traitement de données numériques diffusées dans un flux de transport, ladite unité étant connectée à un système d'accès conditionnel transmettant, dans ledit flux de transport, au module de sécurité (SM3, SM4) un premier flux (P0) de messages d'administration (EMM), ladite méthode est caractérisée en ce qu'elle comprend les étapes suivantes:
- diffuser au moins un second flux (P1, P2) comprenant des messages (EP) d'un correctif apte à mettre à jour le microprogramme du module de sécurité (SM3, SM4), ledit second flux (P1, P2) étant identifié par un identificateur (PID) associé à un type prédéterminé de module de sécurité (SM3, SM4),
- ajouter dans le premier flux (P0) de messages d'administration des messages d'aiguillage (T) comprenant une information de version permettant d'établir si ledit module de sécurité (SM3, SM4) est à jour, et un identificateur indiquant audit module de sécurité le flux (P1, P2) du correctif approprié,
- si la version courante du microprogramme du module de sécurité (SM3, SM4) est inférieure à la version du correctif, aiguiller le module de sécurité (SM3, SM4) vers le flux (P1, P2) de messages (EP) de correctif désigné par l'identificateur inclus dans le message d'aiguillage (T),
- mettre à jour le microprogramme du module de sécurité (SM3, SM4) concerné avec le flux (P1, P2) de messages (EP) du correctif,
- aiguiller le module de sécurité (SM3, SM4) vers le premier flux (P0) de messages d'administration (EMM) lorsque la mise à jour du microprogramme est terminée.

## Description

### Domaine de l'invention

La présente invention concerne le domaine de la mise à jour ou de la modification du microprogramme d'un module de sécurité dans le cadre de la télévision à péage. Plus particulièrement, il s'agit de modifier le logiciel de modules de sécurité d'unités d'utilisateurs en fonction des divers types ou générations de processeur disponibles dans ces modules.

### Arrière plan technique

Le rôle d'un module de sécurité est de contrôler l'accès à un flux transportant des données numériques encryptées mises à disposition d'utilisateurs par un serveur de diffusion. En l'occurrence, dans le domaine de la télévision à péage, une unité d'utilisateur ou décodeur permet d'accéder et de décrypter le flux de données audio/vidéo encryptées diffusé en fonction de droits enregistrés dans le module de sécurité associé audit décodeur.

Le module de sécurité peut être réalisé essentiellement selon trois formes distinctes. L'une d'elles est une carte à microprocesseur, une carte à puce ou plus généralement un module électronique protégé et réputé inviolable. Un tel module généralement amovible est inséré dans un lecteur approprié qui le connecte au décodeur.

Une deuxième forme connue est celle d'un boîtier de circuit intégré placé, généralement de façon définitive et inamovible à l'intérieur du boîtier du décodeur du décodeur. Une variante est constituée d'un circuit monté sur un socle ou connecteur à la façon d'une carte SIM (Subscriber Identity Module) dans un téléphone portable par exemple.

Dans une troisième forme, le module de sécurité est disposé dans le boîtier d'un circuit intégré ayant également une autre fonction, par exemple dans un module de décryptage ou dans le microprocesseur central du décodeur.

Ces modules de sécurité équipés d'interfaces de communication reçoivent des messages destinés d'une part à gérer les droits d'accès au flux diffusé et d'autre part à mettre à jour ou modifier le logiciel ou microprogramme intégré (firmware) assurant le fonctionnement du module lui-même.

Ces messages sont appelés messages d'administration ou de gestion EMM (Entitlement Management Message).

Les mises à jour des droits dans les modules de sécurité des unités d'utilisateur sont effectuées par l'envoi de message d'administration EMM adressés aux unités concernées. Le centre de gestion reçoit une requête transmise par le module de sécurité et transmet en réponse un message EMM contenant par exemple une clé permettant la mise la mise à jour de droits d'accès. Le module de sécurité transmet un message de confirmation de réception au centre de gestion. Cette méthode est décrite dans le document US2004123313.

En ce qui concerne le microprogramme stocké dans le module de sécurité, les modifications, sous forme de morceaux de code (patch, correctif, rustine ou retouche), constituent un ensemble de messages EMM transmis au module dans le flux de transport des données numérique.

Actuellement ces correctifs sont limités en taille et certaines cartes (ou module de sécurité) ne pouvant pas être mises à jour à la version la plus récente sont capables de décrypter le flux ou d'y accéder. Ainsi une nouvelle carte ou une carte recyclée accédant pour la première fois au flux est immédiatement fonctionnelle même sans mise à jour de son microprogramme. Une éventuelle modification de ce dernier est effectuée progressivement avec des messages EMM diffusés dans le flux pendant des périodes de débit de données réduit.

Certains types de cartes nécessitent des correctifs ayant une taille relativement importante et un grand nombre de messages EMM pour les transmettre entièrement. Lorsque ces messages sont transmis dans le flux des données numériques comprenant également les données audio/vidéo encryptées de contenu et des messages de contrôle, la mise à jour peut durer plusieurs heures jusqu'à la réception du correctif complet.

Dans le cas où le correctif serait indispensable pour pouvoir décrypter les données du flux, une nouvelle carte insérée dans le décodeur entraîne par exemple une absence d'image prolongée sur l'écran du téléviseur ce qui est inacceptable.

### Résumé de l'invention

Le but de la présente invention est de pallier les inconvénients sus-mentionnés et d'assurer un chargement rapide d'un correctif de microprogramme dans une carte avec un grand nombre de messages EMM. Ainsi la fréquence des mises à jour peut être augmentée avec des effets néfastes négligeables sur la réception du contenu diffusé.

Ce but est atteint par une méthode de mise à jour du microprogramme d'un module de sécurité associé à une unité d'utilisateur de traitement de données numériques diffusées dans un flux de transport, ladite unité étant connectée à un système d'accès conditionnel transmettant, dans ledit flux de transport, au module de sécurité un premier flux de messages d'administration, ladite méthode est caractérisée en ce qu'elle comprend les étapes suivantes:
- diffuser au moins un second flux comprenant des messages d'un correctif apte à mettre à jour le microprogramme du module de sécurité, ledit second flux étant identifié par un identificateur associé à un type prédéterminé de module de sécurité,
- ajouter dans le premier flux de messages d'administration des messages d'aiguillage comprenant une information de version permettant d'établir si ledit module de sécurité est à jour, et un identificateur indiquant audit module de sécurité le flux du correctif approprié,
- si la version courante du microprogramme du module de sécurité est inférieure à la version du correctif, aiguiller le module de sécurité vers le flux de messages de correctif désigné par l'identificateur inclus dans le message d'aiguillage,
- mettre à jour le microprogramme du module de sécurité concerné avec le flux de messages du correctif,
- aiguiller le module de sécurité vers le premier flux de message d'administration lorsque la mise à jour du microprogramme est terminée.

La méthode permet au module de sécurité de "sauter" vers un flux séparé de messages du correctif le concernant grâce au flux de messages d'aiguillage diffusés dans un flux principal de messages d'administration. Une fois la mise à jour du microprogramme terminée, le module de sécurité est à nouveau aiguillé vers le flux principal. Ce retour peut s'effectuer soit automatiquement, soit avec un message de commutation comprenant un identifiant du premier flux.

Le module de sécurité reçoit alors en un temps minimal un ensemble de messages formant le correctif entier et correspondant à son microprogramme. Selon l'art antérieur les messages du correctif sont diffusés dans le flux de transport à des périodes plus grandes et mélangés à d'autres messages d'administration. Cette transmission mixte nécessite de nombreuses vérifications de la part du module de sécurité afin de déterminer si un message reçu concerne son microprogramme ou non, ce qui augmente considérablement le temps de mise à jour.

Pour une mise en oeuvre préférée de la méthode, au moins trois types de messages d'administration peuvent être utilisés, à savoir:
a) Des messages d'aiguillage (trigger EMM) comprenant un code de type de module de sécurité avec une référence de version finale du microprogramme ou la version à atteindre si la version courante est inférieure, ainsi qu'un identificateur indiquant le flux des messages du correctif.
b) De nombreux messages chaînés (patch EMM) formant le correctif permettant de mettre à jour le microprogramme du module de sécurité d'une version initiale vers une nouvelle version. Chaque message contient le code de type de module de sécurité, la référence de version initiale et finale, un index identifiant le rang d'un message dans la chaîne et les données du correctif de mise à jour.
c) Des messages de commutation (switch EMM) permettant au module de sécurité de recevoir le premier flux de messages lorsque la mise à jour est terminée. Ils servent à rediriger le module de sécurité vers un flux commun (le flux principal de messages) auquel sont connectés tous les modules de sécurité lors de leur fonctionnement normal.

Selon une réalisation, le module de sécurité est associé à un système d'accès conditionnel qui transmet le flux de messages d'administration servant d'une part à contrôler les droits d'accès aux données diffusées dans le flux de transport et d'autre part à gérer la mise à jour du microprogramme. Ainsi, chaque module de sécurité comporte un identificateur du système d'accès conditionnel approprié. Afin de permettre de diriger le module de sécurité vers le flux de messages adéquat, on définit une table de correspondance associant les identificateurs de système d'accès conditionnel aux identificateurs des différents flux utilisés dans le processus de mise à jour.

Les messages d'aiguillage et de commutation contiennent alors non pas un identificateur d'un flux, mais l'identificateur du système d'accès conditionnel transmettant ce flux. La table convertit donc les identificateurs de système d'accès conditionnel en identificateurs indiquant le flux vers lequel le module de sécurité doit être aiguillé.

Un avantage d'une telle table est que les attributions d'un flux avec un identificateur donné à un système de contrôle d'accès peuvent être modifiées à tout moment en fonction des mises à jours disponibles et des types de modules de sécurité utilisés.

### Brève description de la figure

L'invention sera mieux comprise grâce à la description détaillée qui va suivre et qui se réfère à la figure annexée donnée à titre d'exemple nullement limitatif.

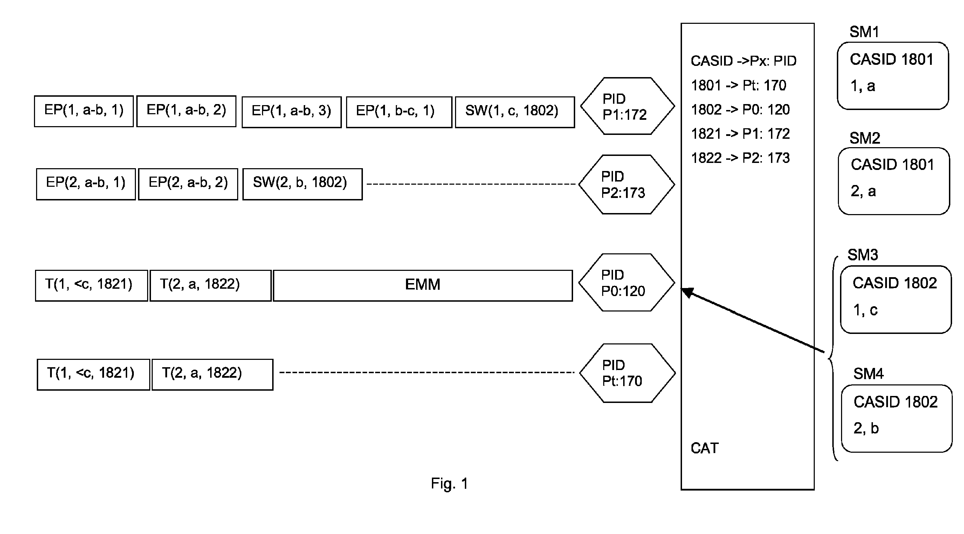

- La figure 1 illustre une vue d'ensemble du mécanisme permettant à un module de sécurité "sauter" vers un flux de messages du correctif le concernant lorsque la version de son microprogramme devient obsolète.

### Description détaillée d'une réalisation préférée de l'invention

La figure 1 montre un schéma simplifié de la méthode de mise à jour de module de sécurité (SM1, SM2, SM3, SM4) à l'aide de messages d'aiguillage (T) et de correctif (EP) utilisant une table (CAT). Cette dernière associe les identificateurs (CASID) de systèmes de contrôle d'accès aux identificateurs (PID) des flux (P0, P1, P2, Pt) de messages d'administration (EMM).

L'exemple de la figure 1 montre un flux (P1) de messages d'un correctif identifié par l'identificateur (PID) noté 172 permettant de mettre à jour les modules de sécurité (SM3) de type 1 de la version du microprogramme a vers la version b puis de la version b vers la version finale c. Le message noté EP(1, a-b, 1) représente le premier message d'une chaîne de trois messages d'un correctif valable pour les modules de sécurité de type 1 contenant les données nécessaires à une mise à jour de la version a vers la version b. Le premier paramètre (1) se rattache au type ou la génération du processeur du module de sécurité, le second paramètre (a-b) indique que la mise à jour s'effectue de la version initiale a vers la version b et enfin le troisième paramètre est un index indiquant le rang du message dans la chaîne, ici (1) pour le premier message. Le second message est noté EP(1, a-b, 2) ne diffère du premier que par son index (2) et de son contenu de données programme qui constituent la suite de celles du premier message et ainsi de suite pour tous les messages d'une même chaîne.

Pour le passage de la version b à la version finale c, l'exemple montre un seul message EP(1, b-c, 1). Le dernier message du flux (P1) noté SW(1, c, 1802) est un message de commutation d'identificateur du système d'accès conditionnel. Ce message permet de rediriger les modules de sécurité du type 1 dont la mise à jour vers la version c à réussi vers le système de contrôle d'accès d'identificateur (CASID) 1802. Pour cette opération, la table (CAT) de correspondance indique que le flux transmis par le système de contrôle d'accès 1802 correspond au flux (P0) dont l'identificateur (PID) est 120 c'est-à-dire un flux de messages d'administration (EMM) principal ou commun transmis à tous les modules de sécurité. Dans la figure 1, la flèche et l'accolade montrent que les modules de sécurité (SM3) et (SM4) de type différent sont connectés au flux principal (P0) de (PID) 120.

Un autre flux (P2) de messages de correctif identifié par l'identificateur (PID) 173 concerne les modules de sécurité (SM4) de type 2. La chaîne comporte ici deux messages de mise à jour EP(2, a-b,1) et EP(2, a-b, 2) permettant le passage de la version a vers la version b du microprogramme. Le message de commutation SW(2, b, 1802) redirige les modules de sécurité de type 2 vers le flux (P0) principal d'identificateur (PID) 120 comme celui du flux (P1) précédent concernant les modules de sécurité de type 1.

Pour initier la mise à jour des modules de sécurité (SM3, SM4) respectivement de type 1 et 2 rattachés au système de contrôle d'accès d'identificateur (CASID) 1802, des messages d'aiguillage T(1, <c, 1821) et T(2, a, 1822) sont transmis dans le flux (P0) principal d'identificateur (PID) 120. Le premier message d'aiguillage T(1, <c, 1821) instruit tous les modules de sécurité de type 1 (premier paramètre) de version inférieure à c (second paramètre) à se connecter au système de contrôle d'accès d'identificateur (CASID) 1821 (troisième paramètre). Cette connexion s'établit grâce à la table (CAT) qui indique qu'au système d'identificateur (CASID) 1821 correspond le flux (P1) de message de correctif dont l'identificateur (PID) est 172. La mise à jour vers la version c sera donc effectuée pour les modules (SM3) de type 1 de version a et de version b comme décrit plus haut. Un module de version b ne sera pas affecté par les trois messages du correctif concernant le passage de la version a vers b, mais seulement par le message EP(1, b-c, 1) qui mettra à jour le module de version b vers la version c.

Le second message d'aiguillage T(2, a, 1822) est chargé de diriger les modules de sécurité (SM4) de type 2 et de version a vers le système de contrôle d'accès d'identificateur (CASID) 1822. La table indique que ce système (1822) transmet le flux (P2) de (PID) 173 permettant de mettre à jour les modules de sécurité (SM4) de type 2 de version a vers la version b.

Un nouveau module de sécurité (SM1, SM2) inséré pour la première fois dans une unité d'utilisateur, comme par exemple un décodeur de télévision à péage, se connecte à un système de contrôle d'accès particulier transmettant essentiellement des messages d'aiguillage (T).

Selon la figure 1, les modules de sécurité (SM1) et (SM2) respectivement de type 1 et 2 avec un microprogramme d'une version initiale sont destinés à se connecter au système de contrôle d'accès d'identificateur (CASID) 1801. Dans la table (CAT) l'identificateur (CASID) 1801 est associé à un flux (Pt) identifié par l'identificateur (PID) 170 comprenant les messages d'aiguillage T(1, <c, 1821) et T(2, a, 1822). Ces messages permettent d'aiguiller respectivement les modules de sécurité de type 1 avec une version inférieure à c vers le système de contrôle d'accès d'identificateur (CASID) 1821 et les modules de sécurité de type 2 avec une version a vers le système de contrôle d'accès d'identificateur (CASID) 1822. Ces deux systèmes 1821 et 1822 transmettent respectivement le flux (P1) dont l'identificateur (PID) est 172 et le flux (P2) de (PID) 173 selon la table (CAT). Ces flux (P1, P2) effectuent alors la mise à jour de ces nouveaux modules de sécurité (SM1, SM2) de la même manière que pour les modules de sécurité en ligne (SM3, SM4) comme décrit ci-dessus. A la fin de la mise à jour, les messages de commutation respectifs SW(1, c, 1802), SW(2, b, 1802) redirigent ces modules vers le flux (P0) principal transmis par le système de contrôle d'accès d'identificateur (CASID) 1802 c'est-à-dire, toujours selon la table (CAT), vers le flux (P0) principal identifié par l'identificateur (PID) 120.

En cas d'erreur, des messages de commutation (SW) inconditionnels, c'est-à-dire sans paramètre de version finale, peuvent être transmis dans un flux de mise à jour pour forcer le module de sécurité à retourner vers le flux (P0) principal quelle que soit la version de son microprogramme.

Lorsque le nombre de types ou de générations de modules de sécurité devient important, le nombre d'identificateurs (CASID) correspondant à des systèmes de contrôle d'accès (CAS) transmettant des flux de messages de mise à jour augmente dans la même proportion. Selon une variante, afin d'optimaliser la méthode, les messages de correctifs (EP) peuvent être groupés dans un même flux avec un identificateur (PID) donné selon une famille de type de module de sécurité. Une telle famille peut être définie selon un type de processeur, de technologie ou de logiciel mis en oeuvre dans le module de sécurité. Un flux de messages de correctif comprend ainsi plusieurs chaînes de messages destinés à plusieurs types d'une même famille de modules. Le premier paramètre peut par exemple désigner une famille et un type au lieu du type de module seul comme dans l'exemple de la figure 1. Le nombre de flux de mise à jour et par conséquent de systèmes d'accès est ainsi réduit en fonction du nombre de types de modules pouvant être regroupés par familles.

## Revendications

1. Méthode de mise à jour du microprogramme d'un module de sécurité (SM3, SM4) associé à une unité d'utilisateur de traitement de données numériques diffusées dans un flux de transport, ladite unité étant connectée à un système d'accès conditionnel transmettant, dans ledit flux de transport, au module de sécurité (SM3, SM4) un premier flux (P0) de messages d'administration (EMM), ladite méthode est **caractérisée en ce qu'**elle comprend les étapes suivantes:
- diffuser au moins un second flux (P1, P2) comprenant des messages (EP) d'un correctif apte à mettre à jour le microprogramme du module de sécurité (SM3, SM4), ledit second flux (P1, P2) étant identifié par un identificateur (PID) associé à un type prédéterminé de module de sécurité (SM3, SM4),
- ajouter dans le premier flux (P0) de messages d'administration des messages d'aiguillage (T) comprenant une information de version permettant d'établir si ledit module de sécurité (SM3, SM4) est à jour, et un identificateur indiquant audit module de sécurité le flux (P1, P2) du correctif approprié,
- si la version courante du microprogramme du module de sécurité (SM3, SM4) est inférieure à la version du correctif, aiguiller le module de sécurité (SM3, SM4) vers le flux (P1, P2) de messages (EP) de correctif désigné par l'identificateur inclus dans le message d'aiguillage (T),
- mettre à jour le microprogramme du module de sécurité (SM3, SM4) concerné avec le flux (P1, P2) de messages (EP) du correctif,
- aiguiller le module de sécurité (SM3, SM4) vers le premier flux (P0) de messages d'administration (EMM) lorsque la mise à jour du microprogramme est terminée.

2. Méthode selon la revendication 1, **caractérisée en ce que** le module de sécurité (SM3, SM4) comporte un identificateur (CASID) du système d'accès conditionnel auquel il est connecté.

3. Méthode selon les revendications 1 et 2, **caractérisée en ce que** l'on définit une table (CAT) de correspondance associant l'identificateur (CASID) du système d'accès conditionnel à l'identificateur (PID) du flux (P0, P1, P2) transmis par ledit système d'accès.

4. Méthode selon les revendications 1 à 3, **caractérisée en ce que** lorsque la mise à jour du microprogramme est terminée, un message de commutation (SW) est transmis aiguillant le module de sécurité (SM3, SM4) vers un système de contrôle d'accès transmettant le premier flux (P0) de messages d'administration (EMM), l'identificateur (PID) dudit flux étant déterminé par la table (CAT) avec l'identificateur (CASID) du système de contrôle d'accès.

5. Méthode selon la revendication 1, **caractérisée en ce que** les messages (EP) du correctif sont transmis en chaîne, chaque message (EP) comprenant au moins un code de type de module de sécurité à mettre à jour, un paramètre indiquant une version finale de ladite mise à jour, un index indiquant le rang du message dans la chaîne et des données de programme de mise à jour.

6. Méthode selon les revendications 1 à 3, **caractérisée en ce que** les messages d'aiguillage (T) comprennent au moins un code de type de module de sécurité à mettre à jour, une référence de version finale du microprogramme, ainsi que l'identificateur (CASID) du système d'accès conditionnel transmettant le flux (P1, P2) de messages (EP) du correctif concernant les modules de sécurité (SM3, SM4) du type correspondant, l'identificateur (PID) dudit flux étant déterminé par la table (CAT) avec l'identificateur (CASID) du système de contrôle d'accès.

7. Méthode selon la revendication 4, **caractérisée en ce que** le message de commutation (SW) comprend au moins un code de type de module de sécurité, une référence de version finale atteinte après la mis à jour et l'identificateur (CASID) du système d'accès conditionnel transmettant le premier flux (P0) de messages d'administration (EMM).

8. Méthode selon les revendications 1 à 3, **caractérisée en ce qu'**un nouveau module de sécurité (SM1, SM2) associé pour la première fois à une unité d'utilisateur se connecte à un système d'accès conditionnel particulier transmettant un flux (Pt) de messages d'aiguillage (T) comprenant au moins un message permettant un aiguillage vers un système d'accès conditionnel transmettant un flux (P1, P2) de messages (EP) du correctif adapté au type et à la version du microprogramme dudit module de sécurité.

9. Méthode selon la revendication 1, **caractérisée en ce que** les messages de correctifs (EP) sont transmis en étant groupés dans un même flux avec un identificateur (PID) donné selon une famille de type de module de sécurité.

10. Méthode selon les revendications 4 et 9, **caractérisée en ce que** les messages (EP) du correctif, les messages (T) d'aiguillage et les messages (SW) de commutation comprennent au moins un code désignant la famille et le type de module de sécurité.
